# EUROPEAN PATENT SPECIFICATION

(11) **EP 3 394 767 B1**
(45) Date of publication and mention of the grant of the patent: **29.01.2020**
(21) Application number: 16843267.2
(22) Date of filing: 22.12.2016
(51) Int. Cl.: G06F 17/28, H04N 7/15

(54) **CONFERENCE SYSTEM FOR THE TRAINING OF INTERPRETERS**
KONFERENZSYSTEM ZUM TRAINIEREN VON DOLMETSCHERN
SYSTÈME DE CONFÉRENCE POUR LA FORMATION D'INTERPRÈTES

(30) Priority: 22.12.2015 BE 201505839
(43) Date of publication of application: 31.10.2018
(73) Proprietor: Televic Education NV, 8870 Izegem (BE)
(72) Inventor: VENANT, Sylvie, 8940 Wervik (BE); DE DONDER, Xavier, 8870 Izegem (BE); CALLEWAERT, Sven, 8820 Torhout (BE)
(74) Representative: Beck, Michaël Andries T.
(86) International application number: PCT/BE2016/000052
(87) International publication number: WO 2017/106939

(56) References cited:
- EP-A2- 0 433 049
- US-A1- 2014 156 254
- Sennheiser: "SL Interpreter TECHNICAL DATA", , 16 July 2014 (2014-07-16), XP055200416, Retrieved from the Internet: URL:http://en-de.sennheiser.com/global-dow nloads/file/2181/SL_Interpreter_SpecSheet. pdf [retrieved on 2015-07-06]

## Description

The present invention relates to a conference system, suitable for the training of interpreters.

A conference system which allows communication between a chairman and participants of a conference, and which at the same time makes simultaneous translation by interpreters possible, is known, inter alia, from European patent application no. EP 2 924 984 A1 in the name of the present Applicant, and also in US 2014/156254, which discloses a conference system comprising a central unit and a chairman's unit, and participant and interpreter units, connected by means of a digital network allowing audio signals to be distributed. Similar systems are in use in the European Parliament in Brussels, the European Commission in Brussels, the United Nations in Geneva, and numerous other organizations. The conference system comprises, inter alia, a central unit, a chairman's unit, a plurality of participant units, and a plurality of interpreter units. The conference system can be made suitable for the training of interpreters, by means of a teacher unit associated with the chairman's unit and trainee units associated with the respective plurality of interpreter units; customized systems of this type are today already known, including the "Avidanet® Interpreter training system" of the present Applicant. The chairman's unit, the plurality of participant units and the plurality of interpreter units are connected to the central unit by means of a first digital network. The central unit is configured to, in an operating mode, allow distribution of: a first set of audio signals from the chairman's unit to selected participant units and selected interpreter units;
a second set of audio signals from selected participant units to selected other participant units, selected interpreter units and the chairman's unit; and a third set of audio signals from selected interpreter units to selected other interpreter units, selected participant units and the chairman's unit.

It is a drawback of the known system that, relative to traditional conference systems, complex additional analog audio cabling is necessary to enable the functionality which is required for training. Once this cabling has been laid, it is impossible to implement additional functions which have not previously been foreseen.

The aforementioned problem is solved by a conference system of the above type, in which the teacher unit and the trainee units are connected to the central unit by means of a second digital network.

The teacher unit and the trainee units are associated with the respective chairman's unit and interpreter units in the sense that they are respectively installed at one and the same location. In this way, a teacher or tutor can operate from his workplace (for example the chairman's seat) both his chairman's unit and the associated teacher unit; similarly, each trainee or student can operate from his workplace (for example in an interpreter booth) both his interpreter unit and the associated trainee unit. The chairman's unit and the interpreter units are locally not necessarily connected to their respective associated teacher unit and trainee units; the necessary functional interaction between the two is made possible by the fact that each of the two elements is respectively connected to the central unit, by means of respectively the first and the second digital network. The central unit thus forms a sort of matrix, which enables interconnection between the first and the second digital network.

In one embodiment of the conference system according to the invention, the teacher unit is configured to dispatch pre-recorded speech, and the central unit is further configured to, in a training mode, allow distribution of the pre-recorded speech, as a fourth set of audio signals, from the teacher unit to the selected interpreter units.

It is an advantage of this embodiment that a centralized distribution of audio from the teacher unit to various interpreter units and participant units is possible. In an interpreter training context, that is to say that the tutor can send or stream the files containing auditory tasks from his unit to the respective interpreter units, so that the trainees can practice (or be tested) on the basis of these tasks.

The distribution to the respective selected interpreter units preferably takes place simultaneously, so that a plurality of students can carry out the same exercise, or can take the same exam, at the same time.

Optionally, the pre-recorded speech at the teacher unit, in the training mode, is forwarded by the central unit not only to the selected interpreter units, but also to selected participant units. This enables observers (for example other students or tutors) to passively follow the simultaneous translation exercise. Furthermore, the pre-recorded speech, in the training mode, can be forwarded by the central unit also to the chairman's unit, in order to allow the tutor to, from there, check the played-back task and evaluate the exercise.

In one embodiment of the conference system according to the invention, the trainee units are configured to dispatch pre-recorded speech, and the central unit is further configured to, in a training mode, allow distribution of the pre-recorded speech, as a fourth set of audio signals, from the trainee units to the respective associated interpreter units.

It is an advantage of this embodiment that a distribution of pre-recorded audio at the trainee unit to the associated interpreter unit is possible. In an interpreter training context, this is to say that the student can send or stream the files containing auditory tasks from his unit to his associated interpreter unit, so that the student can practice independently (or test himself) on the basis of these tasks.

Optionally, the pre-recorded speech at the trainee unit, in the training mode, is forwarded by the central unit not only to the relevant interpreter unit, but also to selected participant units. This makes it possible for observers (for example other students or tutors) to passively follow the simultaneous translation exercise. Furthermore, the pre-recorded speech, in the training mode, can be forwarded by the central unit also to the chairman's unit, in order to allow the tutor to, from there, check the played-back task and evaluate the exercise.

In one embodiment of the conference system according to the invention, the central unit is further configured to, in a training mode, allow distribution of locally captured speech signals, as a fifth set of audio signals, from the interpreter units to the respective associated trainee units, and the trainee units, furthermore, are provided with recording means to record the pre-recorded speech, together with the speech signal captured locally at the associated interpreter unit.

It is an advantage of this embodiment that the result of the exercise or test of each trainee is recorded in the trainee unit of this trainee, together with the pre-recorded audio which has been played back to serve as the task, in order to subsequently allow an evaluation.

In one embodiment of the present invention, the central unit is further configured to, in a training mode, allow distribution of a speech signal captured by the chairman's unit or by a participant unit, as a fourth set of audio signals, to selected trainee units; if the central unit is further configured to, in the training mode, allow distribution of locally captured speech signals, as a fifth set of audio signals, from the interpreter units to the respective associated trainee units; and the trainee units, furthermore, are provided with recording means to record the speech signal captured by the chairman's unit or by the participant unit, together with the speech signal captured locally at the associated interpreter unit.

It is an advantage of this embodiment that the result of the exercise or test of each trainee is recorded in the trainee unit of this trainee, together with the text spoken by the chairman or by a participant, which serves as the task, in order to subsequently allow an evaluation.

In one specific embodiment, the conference system is further provided with cameras associated with the trainee units, and the recording means are configured to record, at at least one of the trainee units, a video signal, together with a speech signal captured locally at the associated interpreter unit.

It is an advantage of this embodiment that visual information on the proper conduct of an exercise or test can be gathered, and recorded together with the task and the speech of the trainee.

In one embodiment of the conference system according to the invention, the central unit is further configured to, in a training mode, allow distribution of pre-recorded speech, dispatched by the teacher unit or by a trainee unit, as a fourth set of audio signals, to selected interpreter units; the central unit is further configured to, in the training mode, allow distribution of locally captured speech signals, as a fifth set of audio signals, from the interpreter units to the teacher unit; and the teacher unit, furthermore, is provided with recording means to record the pre-recorded speech, together with the speech signals captured locally by respective interpreter units.

It is an advantage of this embodiment that the tutor can subsequently evaluate the conduct of the exercise or test, by recording the audio signal which is sent back from the trainee units. The tutor has the possibility of recording the task (fourth set of signals) and the speech of the trainee (fifth set of signals) in a synchronized manner, so that these can subsequently be listened to simultaneously.

According to one aspect of the present invention, a computer program product is provided, comprising code means which are configured to, in a central unit, provide the distribution of the sets of signals as described above.

These and other technical effects and advantages of embodiments of the present invention will now be explained in greater detail with reference to the appended figures, in which:
- figure 1 presents an overview of a system architecture for a conference system according to one embodiment of the present invention;
- figure 2 schematically represents a first set of signals in the system of figure 1;
- figure 3 schematically represents a second set of signals in the system of figure 1;
- figure 4 schematically represents a third set of signals in the system of figure 1;
- figure 5 schematically represents a fourth set of signals in the system of figure 1; and
- figure 6 schematically represents a fifth set of signals in the system of figure 1.

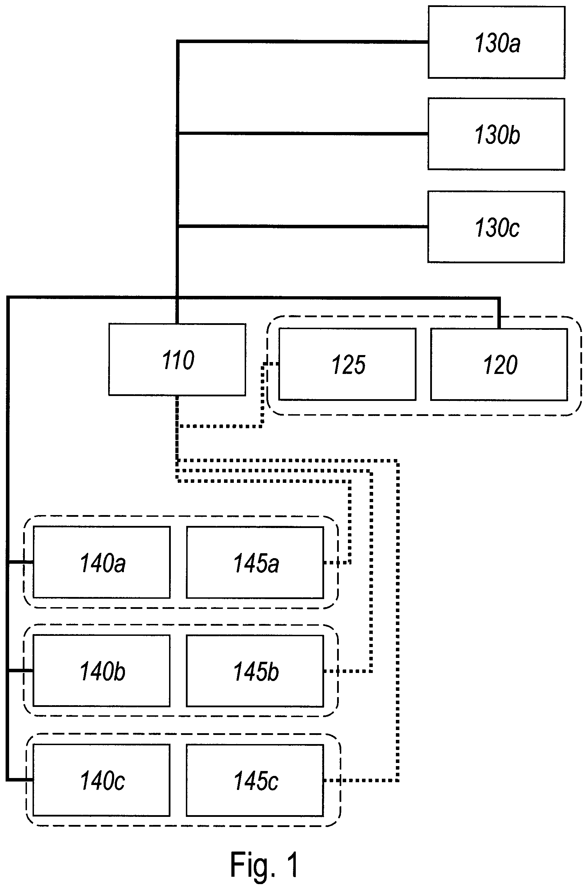

Figure 1 presents a schematic overview of a system architecture for a conference system according to one embodiment of the present invention. A central unit **110** is responsible for forwarding the various signals between the connected chairman's unit **120,** participant units **130a-c,** and interpreter units **140a-c.** Without loss of generality, in the illustrated case three participant units **130a-c** and three interpreter units **140a-c** are represented; it will be readily clear to the person skilled in the art that these can be more or fewer in number.

The chairman's unit **110,** the participant units **130a-c** and the interpreter units **140a-c** are connected to the central unit **110** by means of a first digital network, represented in solid lines in the figures (any bridges, switches and routers which would be necessary for the functioning of the network are not represented separately).

The normal working of the conference system in its "operating mode" (outside the training context) is characterized by three signal streams, which can be realized through the agency of the central unit **110:**

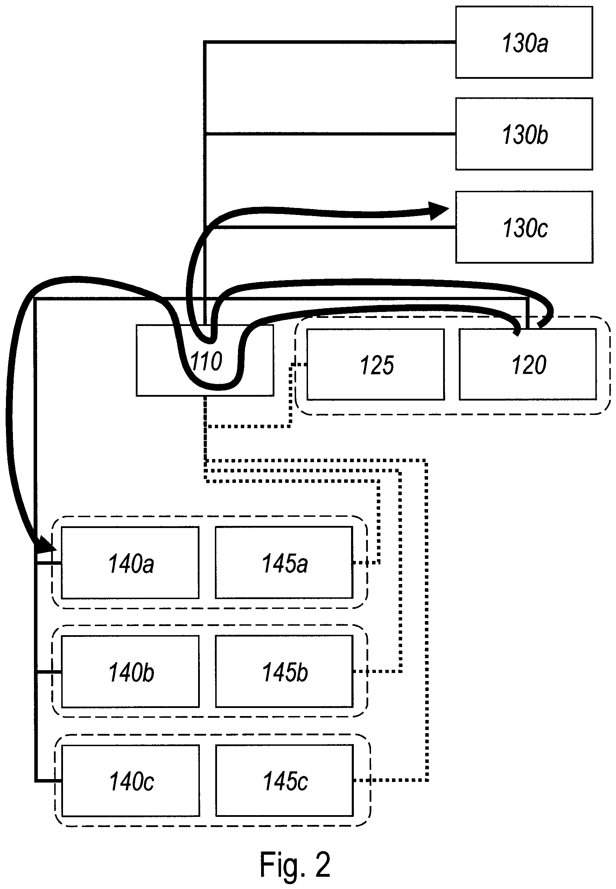

- Figure 2 schematically represents a first set of audio signals, from the chairman's unit **120** to selected participant units **130c** and selected interpreter units **140a;** this is to say that the participants and the interpreters can hear the chairman speak.

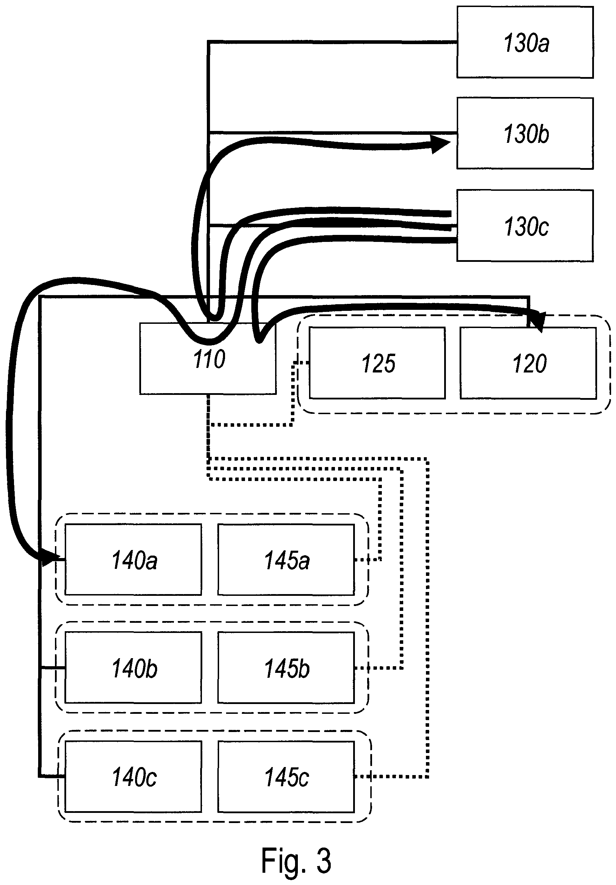

- Figure 3 schematically represents a second set of audio signals, from selected participant units **130c** to selected other participant units **130b,** selected interpreter units **140a** and the chairman's unit **120;** this is to say that the interpreters can hear the participants, that participants can hear one another speak, and that the chairman can hear the participants.

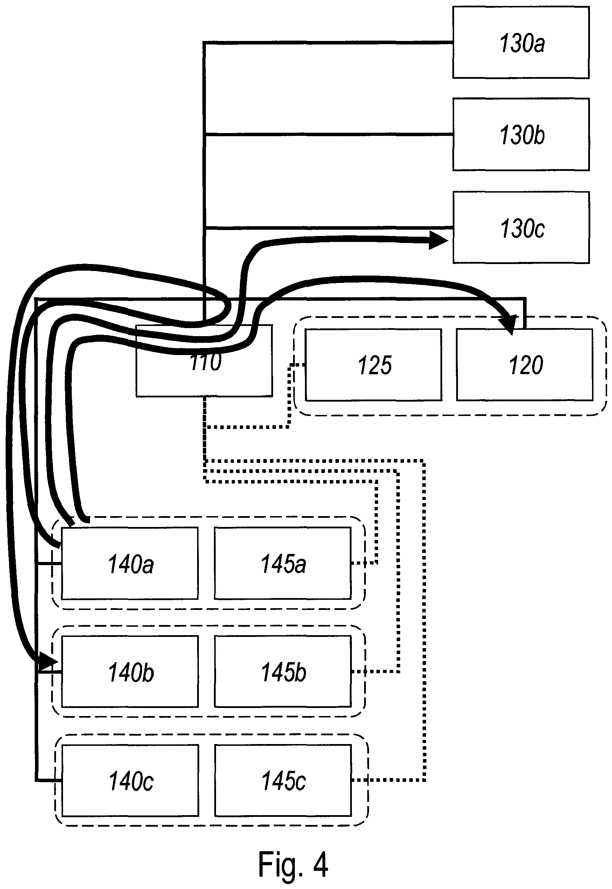

- Figure 4 schematically represents a third set of audio signals, from selected interpreter units **140a** to selected other interpreter units **140b,** selected participant units **130c** and the chairman's unit **120;** this is to say that the chairman, the participants and interpreters, in relay mode, can hear the interpreters speak.

The signals, which in an "operating mode" can be forwarded, can serve as a task for an exercise or a test for the benefit of students. In particular, the exercise or test can consist in the students, via their interpreter unit **140a,** listening to a task which is recorded by the tutor via the chairman's unit **120** or is played back via a possible audio input of the chairman's unit **120** (first set of audio signals), and simultaneously translate these via the interpreter unit **140a,** wherein the tutor can listen to the translation via his chairman's unit **120** (third set of audio signals).

The additional training facilities (in particular the centralized or distributed recording and/or playback of tasks) are made possible by the trainee units **145a-c** and the teacher unit **125,** which are connected to the central unit **110** via a second digital network, represented in dotted lines in the figures (any bridges, switches and routers which would be necessary for the functioning of the network are not represented separately). The required extra functionality of the central unit **110** is herein designated as the training mode.

The teacher unit **125** comprises at least the functionality of data storage (for example a hard disk, in order to be able to store a digital audio file) and the playback of audio (for example from an audio file stored on the hard disk). The teacher unit **125** comprises, in principle, no microphone or headphone of its own, but is associated with a chairman's unit **120** which does have this, optionally in the form of a headset (microphone-headphone combination). The teacher unit **125** preferably comprises a simple user interface, for example a combination of a screen and a keyboard and/or mouse (this can be the case if the teacher unit is PC-based) or a touch screen (this can be the case if the teacher unit is tablet-based); with this, an audio file which is to be played back or recorded can preferably be selected.

The trainee unit **145a-c** comprises at least the functionality of data storage (for example a hard disk, in order to be able to store a digital audio file) and the playback of audio (for example from an audio file stored on the hard disk). Optionally, the trainee unit **145a-c** also comprises a webcam. The trainee unit **145a-c** comprises, in principle, no microphone or headphone of its own, but is associated with an interpreter unit **140a-c** which does have this, optionally in the form of a headset (microphone-headphone combination). The trainee unit **145a-c** preferably comprises a simple user interface, for example a combination of a screen and a keyboard and/or mouse (this can be the case if the trainee unit is PC-based) or a touch screen (this can be the case if the trainee unit is tablet-based); with this, an audio file which is to be played back or recorded can preferably be selected.

In some embodiments of the present invention, the trainee unit **145a-c** can execute, inter alia, the following functions:
- The giving of visual/textual instructions to the user (trainee);
- The playback of a locally stored sound file, to be reproduced via the headphone or loudspeaker of the associated interpreter unit (the sound signal is then sent from the trainee unit via the second digital network to the central unit, whence it is forwarded via the first digital network to the associated interpreter unit);
- The storage of a locally recorded speech file, to be captured via the microphone of the associated interpreter unit, optionally in combination with the recording of the played-back task (i.e. the abovementioned sound file, which is stored locally or in the teacher unit and which is reproduced to the trainee via the associated interpreter unit); optionally a locally recorded video signal is in this case additionally stored, to be captured via the optional webcam;
- The dispatch (in particular to the chairman's unit) of said stored speech recording (optionally with the task and/or the video recording).

By in this way making use of interpreter units which form part of a traditional conference infrastructure, the practicing and testing of the interpreting skills can take place under conditions which approximate as closely as possible to professional reality.

The practicing and testing of interpreting skills is realized by reproducing a task (a spoken text in a source language according to choice) to the student, who translates this simultaneously, out loud, into a predefined target language. The spoken translation must be able to be listened to simultaneously and in synchronization with the task (directly or subsequently, by means of recording) for evaluation (self-evaluation and/or evaluation by the tutor). The system according to the present invention offers a maximum flexibility regarding the choice of where the task is stored and played back, and where the spoken translation is stored and listened to.

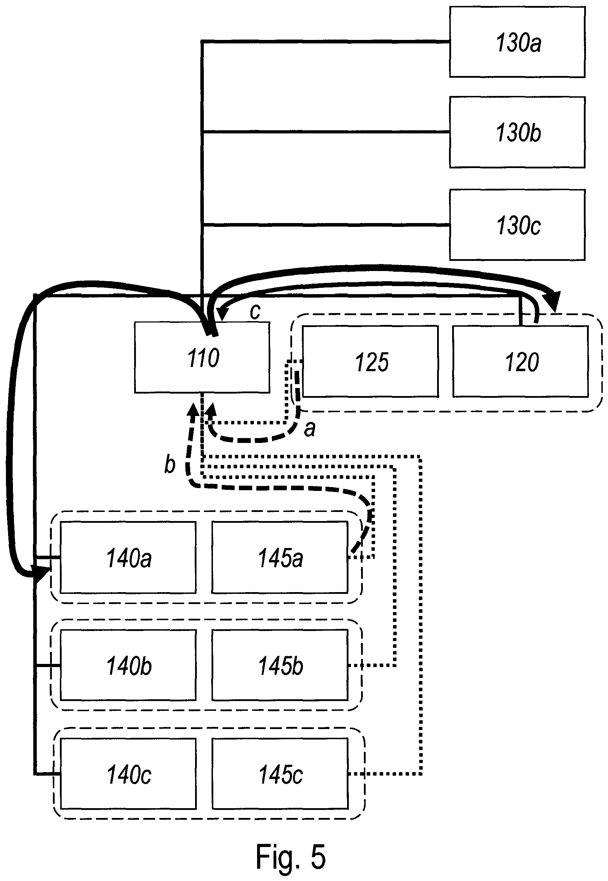

The audio to be listened to by the student (i.e. the exercise or task) reaches the relevant interpreter unit **140a** via the first digital network as a fourth set of signals, as represented in figure 5 (solid arrow). This audio can derive from the teacher unit **125** (arrow in dotted line, with designation "a"), from the trainee unit **145a** associated with the interpreter unit **140a** (arrow in dotted line, with designation "b"), or from directly captured speech of a tutor who operates the chairman's unit **120** or a participant unit (solid arrow, with designation "c").

In the first case (arrow "a" in figure 5), it is a question of central distribution of audio. The teacher unit **125** is then configured to store and dispatch pre-recorded speech. The central unit **110** is configured to allow distribution of the pre-recorded speech, from the teacher unit **125** to the selected interpreter unit **140a.**

In the second case (arrow "b" in figure 5), the trainee unit **145a** is configured to store and dispatch pre-recorded speech, so that the student himself can start the playback of the task. The central unit **110** is configured to allow distribution of the pre-recorded speech, from the trainee unit **145a** to the interpreter unit **140a** associated therewith.

In the third case (arrow "c" in figure 5), use is made of the first digital network to, as in the first operating mode, dispatch "live" captured speech from the chairman's unit **120** or a participant unit (not shown) to the selected interpreter unit **140a.**

In the three cases, the task is preferably sent by the central unit **110** over the first digital network to the chairman's unit **120** in order to allow the tutor to listen to the task.

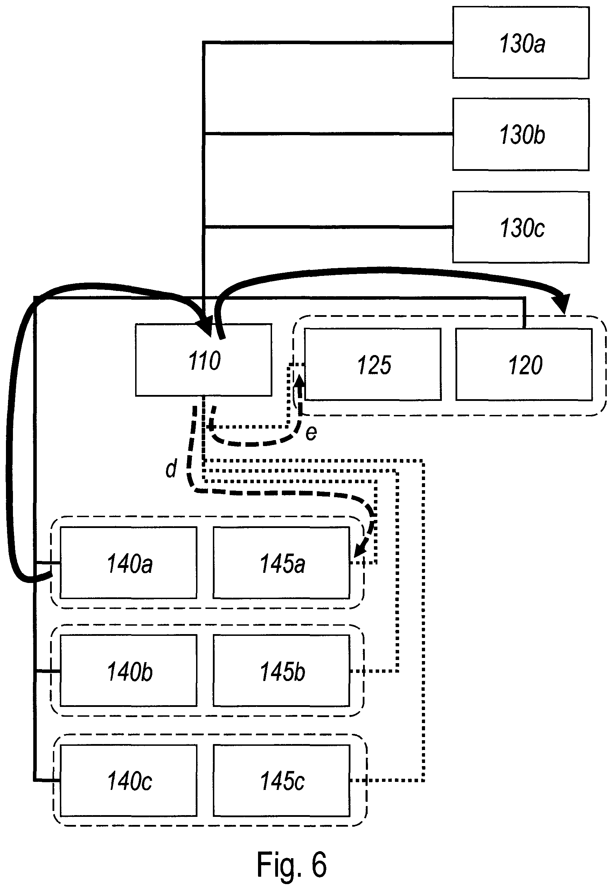

The text spoken by the student (i.e. the translation of the exercise or task) is captured by his interpreter unit **140a** and dispatched away from there for storage as a fifth set of signals, as represented in figure 6 (solid arrow). This audio can be conveyed to the trainee unit **145a** associated with the interpreter unit **140a** (arrow in dotted line with designation "d") or to the teacher unit **125** (arrow in dotted line with designation "e").

In the first case (arrow "d" in figure 6), it is a question of distributed recording of audio. The trainee units are then provided with recording means in order to record the task (which is already available there in case "b" of figure 5, or which, if need be, is additionally received there via the route of arrow "d" in figure 6 if the task is dispatched according to case "a" or "c" of figure 5), together with a speech signal captured locally at said interpreter unit.

Optionally, the system is additionally provided with cameras associated with the trainee units **145a-c,** and the recording means are configured to record, at at least one of the trainee units, a video signal, together with a speech signal, captured locally at the associated interpreter unit, and the task.

In the second case (arrow "e" in figure 6), it is a question of central recording of audio. The teacher unit is then provided with recording means to record the task (which is already available there in case "a" of figure 5, or which, if need be, is additionally received there via the route of arrow "e" in figure 6 if the task is dispatched according to case "b" or "c" of figure 5), together with a speech signal captured locally at the interpreter unit.

The text spoken by the student is in both cases preferably sent by the central unit **110** over the first digital network to the chairman's unit **120** in order to allow the tutor to listen to the speech.

The first and the second digital network are preferably networks which operate according to a generally accepted standard. At the level of the physical layer and the datalink layer, networks according to IEEE Std 802.3 ("Ethernet") can be used, in particular 100 Mb/s, 1000 Mb/s or 10 Gb/s networks over suitable copper or glass fiber cabling. Wireless networks having a sufficiently high capacity, for example according to IEEE Std 802.11, can likewise be used. At the level of the network layer and transport layer, the Internet Protocol (IP) and User Datagram Protocol (UDP) can respectively be used. The central unit **110,** the chairman's unit **120,** the teacher unit **125,** the participant units **130a-c,** the interpreter units **140a-c,** and the trainee units **145a-c,** have for this purpose the required interfaces (at hardware and software level).

The above-described functions of the central unit **110** can be implemented in hardware components (e.g. ASICs) specifically designed for the purpose, configurable components (e.g. FPGA's), programmable components provided with suitable software (e.g. DSP's or processors for general purposes), or some combination of the above. The same components can also execute other functions.

The present invention also relates to a computer program product, comprising code means which are configured to, in a central unit **110,** provide the distribution of the sets of signals as described above.

Although the invention above has been described with reference to specific embodiments, this is meant as illustration and not as limitation of the scope of protection, which is defined by the attached claims. Moreover, the functions which have been described as a component part of different embodiments can be combined with one another without departing from the principles and scope of the present invention.

## Claims

1. A conference system, suitable for the training of interpreters, which conference system comprises:
- a central unit (110),
- a chairman's unit (120),
- a plurality of participant units (130a-c), and
- a plurality of interpreter units (140a-c);
- a teacher unit (125) associated with the chairman's unit (120); and
- trainee units (145a-c) associated with the respective plurality of interpreter units (140a-c);
wherein the chairman's unit (120), the plurality of participant units (130a-c) and the plurality of interpreter units (140a-c) are connected to the central unit (110) by means of a first digital network; and
wherein the central unit (110) is configured to, in an operating mode, allow distribution of:
- a first set of audio signals from the chairman's unit (120) to selected participant units (130a-c) and selected interpreter units (140a-c);
- a second set of audio signals from selected participant units (130a-c) to selected other participant units (130a-c), selected interpreter units (140a-c) and the chairman's unit (120); and
- a third set of audio signals from selected interpreter units (140a-c) to selected other interpreter units (140a-c), selected participant units (130a-c) and the chairman's unit (120);
wherein:
- the teacher unit (125) and the trainee units (145a-c) are connected to the central unit (110) by means of a second digital network;
- the teacher unit (125) is configured to dispatch pre-recorded speech, and wherein the central unit (110) is further configured to, in a training mode, allow distribution of the pre-recorded speech, as a fourth set of audio signals, from the teacher unit (125) to selected interpreter units (140a-c); and
- the trainee units (145a-c) are configured to dispatch pre-recorded speech, and wherein the central unit (110) is further configured to, in a training mode, allow distribution of the pre-recorded speech, as a fourth set of audio signals, from the trainee units (145a-c) to the respective associated interpreter units (140a-c).

2. The conference system as claimed in claim 1, wherein the central unit (110) is further configured to, in a training mode, allow distribution of locally captured speech signals, as a fifth set of audio signals, from the interpreter units (140a-c) to the respective associated trainee units (145a-c), and wherein the trainee units (145a-c), furthermore, are provided with recording means to record the pre-recorded speech, together with the speech signal captured locally at the associated interpreter unit (140a-c).

3. The conference system as claimed in claim 1, wherein the central unit (110) is further configured to, in a training mode, allow distribution of a speech signal captured by the chairman's unit (120) or by a participant unit (130a-c), as a fourth set of audio signals, to selected trainee units (145a-c); wherein the central unit (110) is further configured to, in the training mode, allow distribution of locally captured speech signals, as a fifth set of audio signals, from the interpreter units (140a-c) to the respective associated trainee units (145a-c) ;
and wherein the trainee units (145a-c), furthermore, are provided with recording means to record the speech signal captured by the chairman's unit (120) or by the participant unit (130a-c), together with the speech signal captured locally at the associated interpreter unit (140a-c).

4. The conference system as claimed in claim 2 or 3, further provided with cameras associated with the trainee units (145a-c), wherein the recording means are configured to record, at at least one of the trainee units, a video signal, together with the speech signal captured locally at the associated interpreter unit (145a-c) .

5. The conference system as claimed in claim 1, wherein the central unit (110) is further configured to, in a training mode, allow distribution of pre-recorded speech, dispatched by the teacher unit (125) or by a trainee unit (145a-c), as a fourth set of audio signals, to selected interpreter units (140a-c);
wherein the central unit (110) is further configured to, in the training mode, allow distribution of locally captured speech signals, as a fifth set of audio signals, from the interpreter units (140a-c) to the teacher unit (125);
and wherein the teacher unit, furthermore, is provided with recording means to record the pre-recorded speech, together with the speech signals locally captured by respective interpreter units (140a-c).

6. A computer program product, comprising code means which are configured to, in a central unit (110), provide the distribution of the sets of signals as claimed in any of claims 1-5.

## Patentansprüche

1. Konferenzsystem, das für die Ausbildung von Dolmetschern geeignet ist, wobei das Konferenzsystem Folgendes umfasst:
- eine Zentraleinheit (110),
- eine Leitereinheit (120),
- eine Vielzahl von Teilnehmereinheiten (130a-c) und
- eine Vielzahl von Dolmetschereinheiten (140a-c);
- eine Lehrereinheit (125), die mit der Leitereinheit (120) verknüpft ist; und
- Auszubildendeneinheiten (145a-c), die mit der jeweiligen Vielzahl von Dolmetschereinheiten (140a-c) verknüpft sind;
wobei die Leitereinheit (120), die Vielzahl von Teilnehmereinheiten (130a-c) und die Vielzahl von Dolmetschereinheiten (140a-c) mittels eines ersten digitalen Netzwerks mit der Zentraleinheit (110) verbunden sind und
wobei die Zentraleinheit (110) in einem Betriebsmodus dazu ausgelegt ist, die Verteilung von Folgendem zu erlauben:
- einen ersten Satz von Audiosignalen von der Leitereinheit (120) an ausgewählte Teilnehmereinheiten (130a-c) und ausgewählte Dolmetschereinheiten (140a-c);
- einen zweiten Satz von Audiosignalen von ausgewählten Teilnehmereinheiten (130a-c) an ausgewählte andere Teilnehmereinheiten (130a-c), ausgewählte Dolmetschereinheiten (140a-c) und die Leitereinheit (120) und
- einen dritten Satz von Audiosignalen von ausgewählten Dolmetschereinheiten (140a-c) an ausgewählte andere Dolmetschereinheiten (140a-c), ausgewählte Teilnehmereinheiten (130a-c) und die Leitereinheit (120);
wobei:
- die Lehrereinheit (125) und die Auszubildendeneinheiten (145a-c) mittels eines zweiten digitalen Netzwerks mit der Zentraleinheit (110) verbunden sind;
- die Lehrereinheit (125) dazu ausgelegt ist, vorab aufgezeichnete Sprache abzuschicken, und wobei die Zentraleinheit (110) ferner dazu ausgelegt ist, in einem Ausbildungsmodus die Verteilung der vorab aufgezeichneten Sprache als einen vierten Satz von Audiosignalen von der Lehrereinheit (125) an ausgewählte Dolmetschereinheiten (140a-c) zu erlauben; und
- die Auszubildendeneinheiten (145a-c) dazu ausgelegt sind, vorab aufgezeichnete Sprache abzuschicken, und wobei die Zentraleinheit (110) ferner dazu ausgelegt ist, in einem Ausbildungsmodus die Verteilung der vorab aufgezeichneten Sprache als einen vierten Satz von Audiosignalen von den Auszubildendeneinheiten (145a-c) an die jeweiligen Dolmetschereinheiten (140a-c) zu erlauben.

2. Konferenzsystem nach Anspruch 1, wobei die Zentraleinheit (110) ferner dazu ausgelegt ist, in einem Ausbildungsmodus die Verteilung von lokal erfassten Sprachsignalen als einen fünften Satz von Audiosignalen von den Dolmetschereinheiten (140a-c) an die jeweiligen verknüpften Auszubildendeneinheiten (145a-c) zu erlauben, und wobei die Auszubildendeneinheiten (145a-c) darüber hinaus mit Aufzeichnungsmitteln zum Aufzeichnen der vorab aufgezeichneten Sprache zusammen mit dem Sprachsignal, das lokal an der verknüpften Dolmetschereinheit (140a-c) erfasst wird, versehen sind.

3. Konferenzsystem nach Anspruch 1, wobei die Zentraleinheit (110) ferner dazu ausgelegt ist, in einem Ausbildungsmodus die Verteilung eines Sprachsignals, das von der Leitereinheit (120) oder von einer Teilnehmereinheit (130a-c) erfasst wird, als einen vierten Satz von Audiosignalen an ausgewählte Auszubildendeneinheiten (145a-c) zu erlauben;
wobei die Zentraleinheit (110) ferner dazu ausgelegt ist, im Ausbildungsmodus die Verteilung von lokal erfassten Sprachsignalen als einen fünften Satz von Audiosignalen von den Dolmetschereinheiten (140a-c) an die jeweiligen verknüpften Auszubildendeneinheiten (145a-c) zu erlauben;
und wobei die Auszubildendeneinheiten (145a-c) darüber hinaus mit Aufzeichnungsmitteln zum Aufzeichnen des von der Leitereinheit (120) oder von der Teilnehmereinheit (130a-c) aufgezeichnete Sprachsignal zusammen mit dem Sprachsignal, das lokal an der verknüpften Dolmetschereinheit (140a-c) erfasst wird, versehen sind.

4. Konferenzsystem nach Anspruch 2 oder 3, das ferner mit Kameras versehen ist, die mit den Auszubildendeneinheiten (145a-c) verknüpft sind, wobei die Aufzeichnungsmittel dazu ausgelegt sind, an mindestens einer der Auszubildendeneinheiten zusammen mit dem Sprachsignal, das lokal an der verknüpften Dolmetschereinheit (145a-c) erfasst wird, ein Videosignal aufzuzeichnen.

5. Konferenzsystem nach Anspruch 1, wobei die Zentraleinheit (110) ferner dazu ausgelegt ist, in einem Ausbildungsmodus die Verteilung von vorab aufgezeichneter Sprache, die von der Lehrereinheit (125) oder von einer Auszubildendeneinheit (145a-c) abgeschickt wird, als einen vierten Satz von Audiosignalen an ausgewählte Dolmetschereinheiten (140a-c) zu erlauben;
wobei die Zentraleinheit (110) ferner dazu ausgelegt ist, im Ausbildungsmodus die Verteilung von lokal erfassten Sprachsignalen als einen fünften Satz von Audiosignalen von den Dolmetschereinheiten (140a-c) an die Lehrereinheit (125) zu erlauben;
und wobei die Lehrereinheit darüber hinaus mit Aufzeichnungsmitteln zum Aufzeichnen der vorab aufgezeichneten Sprache zusammen mit den Sprachsignalen, die lokal von jeweiligen Dolmetschereinheiten (140a-c) erfasst werden, versehen ist.

6. Computerprogrammprodukt, das Codemittel umfasst, die dazu ausgelegt sind, in einer Zentraleinheit (110) die Verteilung der Sätze von Signalen nach einem der Ansprüche 1-5 bereitzustellen.

## Revendications

1. Système de conférence, approprié pour la formation d'interprètes, lequel système de conférence comprend :
- une unité centrale (110),
- une unité pour président (120),
- une pluralité d'unités pour participant (130a-c), et
- une pluralité d'unités pour interprète (140a-c) ;
- une unité pour enseignant (125) associée à l'unité pour président (120) ; et
- des unités pour stagiaire (145a-c) associées à la pluralité respective d'unités pour interprète (140a-c) ;
dans lequel l'unité pour président (120), la pluralité d'unités pour participant (130a-c) et la pluralité d'unités pour interprète (140a-c) sont connectées à l'unité centrale (110) au moyen d'un premier réseau numérique ; et
dans lequel l'unité centrale (110) est configurée pour, dans un mode d'exploitation, permettre la distribution de :
- un premier jeu de signaux audio en provenance de l'unité pour président (120) vers des unités pour participant sélectionnées (130a-c) et des unités pour interprète sélectionnées (140a-c) ;
- un deuxième jeu de signaux audio en provenance d'unités pour participant sélectionnées (130a-c) vers d'autres unités pour participant sélectionnées (130a-c), des unités pour interprète sélectionnées (140a-c) et l'unité pour président (120) ; et
- un troisième jeu de signaux audio en provenance d'unités pour interprète sélectionnées (140a-c) vers d'autres unités pour interprète sélectionnées (140a-c), des unités pour participant sélectionnées (130a-c) et l'unité pour président (120) ;
dans lequel :
l'unité pour enseignant (125) et les unités pour stagiaire (145a-c) sont connectées à l'unité centrale (110) au moyen d'un second réseau numérique ;
l'unité pour enseignant (125) est configurée pour répartir un discours préenregistré, et dans lequel l'unité centrale (110) est en outre configurée pour, dans un mode de formation, permettre la distribution du discours préenregistré, comme un quatrième jeu de signaux audio, en provenance de l'unité pour enseignant (125) vers des unités pour interprète sélectionnées (140a-c) ; et
les unités pour stagiaire (145a-c) sont configurées pour répartir un discours préenregistré, et dans lequel l'unité centrale (110) est en outre configurée pour, dans un mode de formation, permettre la distribution du discours préenregistré, comme un quatrième jeu de signaux audio, en provenance des unités pour stagiaire (145a-c) vers des unités pour interprète associées respectives (140a-c).

2. Système de conférence selon la revendication 1, dans lequel l'unité centrale (110) est en outre configurée pour, dans un mode de formation, permettre la distribution de signaux vocaux localement capturés, comme un cinquième jeu de signaux audio, en provenance des unités pour interprète (140a-c) vers les unités pour stagiaire associées respectives (145a-c), et dans lequel les unités pour stagiaire (145a-c), en outre, sont munies de moyens d'enregistrement pour enregistrer le discours préenregistré, en même temps que le signal vocal capturé localement au niveau de l'unité pour interprète associée (140a-c).

3. Système de conférence selon la revendication 1,
dans lequel l'unité centrale (110) est en outre configurée pour, dans un mode de formation, permettre la distribution d'un signal vocal capturé par l'unité pour président (120) ou par une unité pour participant (130a-c), comme un quatrième jeu de signaux audio, vers des unités pour stagiaire sélectionnées (145a-c) ;
dans lequel l'unité centrale (110) est en outre configurée pour, dans un mode de formation, permettre la distribution de signaux vocaux localement capturés, comme un cinquième jeu de signaux audio, en provenance des unités pour interprète (140a-c) vers les unités pour stagiaire associées respectives (145a-c) ;
et dans lequel les unités pour stagiaire (145a-c), en outre, sont munies de moyens d'enregistrement pour enregistrer le signal vocal capturé par l'unité pour président (120) ou par l'unité pour participant (130a-c), en même temps que le signal vocal capturé localement au niveau de l'unité pour interprète associée (140a-c).

4. Système de conférence selon la revendication 2 ou 3, en outre muni d'appareils de prise de vues associés aux unités pour stagiaire (145a-c), dans lequel les moyens d'enregistrement sont configurés pour enregistrer, au niveau d'au moins une des unités pour stagiaire, un signal vidéo, en même temps que le signal vocal capturé localement au niveau de l'unité pour interprète associée (145a-c).

5. Système de conférence selon la revendication 1, dans lequel l'unité centrale (110) est en outre configurée pour, dans un mode de formation, permettre la distribution de discours préenregistré, réparti par l'unité pour enseignant (125) ou par une unité pour stagiaire (145a-c), comme un quatrième jeu de signaux audio, vers des unités pour interprète sélectionnées (140a-c) ;
dans lequel l'unité centrale (110) est en outre configurée pour, dans le mode de formation, permettre la distribution de signaux vocaux localement capturés, comme un cinquième jeu de signaux audio, en provenance des unités pour interprète (140a-c) vers l'unité pour enseignant (125) ;
et dans lequel l'unité pour enseignant, en outre, est munie de moyens d'enregistrement pour enregistrer le discours préenregistré, en même temps que les signaux vocaux localement capturés par des unités pour interprète respectives (140a-c).

6. Produit formant programme informatique, comprenant un moyen formant code qui est configuré pour, dans une unité centrale (110), fournir la distribution des jeux de signaux tels que revendiqués selon l'une quelconque des revendications 1 à 5.
